(19) **Europäisches Patentamt**
**European Patent Office**
**Office européen des brevets**

(11) **EP 3 567 549 A1**

(12) **EUROPEAN PATENT APPLICATION**

(43) Date of publication:
**13.11.2019 Bulletin 2019/46**

(51) Int Cl.:
***G06T 7/50*** *(2017.01)*

(21) Application number: **18171058.3**

(22) Date of filing: **07.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Technische Universität München**
**80333 München (DE)**

(72) Inventors:
• **Häfner, Björn**
**81375 München (DE)**
• **Quéau, Yvain**
**14000 Caen (FR)**
• **Möllenhoff, Thomas**
**80336 München (DE)**
• **Cremers, Daniel**
**80939 München (DE)**

(74) Representative: **Lucke, Andreas**
**Boehmert & Boehmert**
**Anwaltspartnerschaft mbB**
**Pettenkoferstrasse 22**
**80336 München (DE)**

(54) **DEPTH SUPER-RESOLUTION FROM SHADING**

(57)    The present invention provides a method for determining a high-resolution depth map of a scene, the method comprising: obtaining a low-resolution depth map of the scene, obtaining a high-resolution image of the scene, initializing an estimated reflectance map, an estimated lighting vector and an estimated depth map, wherein the estimated depth map is in high-resolution, iteratively simultaneously updating the estimated reflectance map, the estimated lighting vector, and the estimated depth-map, wherein updating the estimated depth map is partially based on the high-resolution image, and determining the high-resolution depth map based on the iteratively updated estimated depth-map.

FIG. 2

**Description**

**TECHNICAL FIELD**

The present invention relates to a method and a device for determining a high-resolution depth map of a scene. The present invention also relates to a computer-readable storage medium storing program code, the program code comprising instructions for carrying out such a method.

**BACKGROUND**

RGB-D sensors have become very popular for 3D reconstruction, in view of their low cost and ease of use. They deliver a colored point cloud in a single shot, but the resulting shape often misses thin geometric structures. This is due to noise, quantization and, more importantly, the coarse resolution of the depth map. However, super-resolution of a solitary depth map without additional constraint is an ill-posed problem. In comparison, the quality and resolution of the companion RGB image are substantially better. For instance, a device may deliver $1280 \times 1024$ px$^2$ RGB images, but only up to $640 \times 480$ px$^2$ depth maps. Therefore, it seems natural to rely on color to refine depth. Yet, retrieving geometry from a single color image is another ill-posed problem, called shape-from-shading. Besides, combining it with depth clues requires the RGB and depth images to have the same resolution. The resolution of the depth map thus remains a limiting factor in single-shot RGB-D sensing.

**SUMMARY OF THE INVENTION**

The objective of the present invention is to provide a method and a device for determining a high-resolution depth map of a scene, wherein the method and the device overcome one or more of the above-mentioned problems of the prior art.

A first aspect of the invention provides a method for determining a high-resolution depth map of a scene, the method comprising:

- obtaining a low-resolution depth map of the scene,
- obtaining a high-resolution image of the scene,
- initializing an estimated reflectance map, an estimated lighting vector and an estimated depth map, wherein the estimated depth map is in high-resolution,
- iteratively simultaneously updating the estimated reflectance map, the estimated lighting vector, and the estimated depth-map, wherein updating the estimated depth map is partially based on the high-resolution image, and
- determining the high-resolution depth map based on the iteratively updated estimated depth-map.

Therein, low-resolution refers to a spatial resolution that is lower than the high-resolution.

Initializing an estimated reflectance map, an estimated lighting vector and an estimated depth map may refer to creating these variables and assigning them an initial value. The initial value may be predetermined (e.g. a predetermined constant) or it may be determined based on another known parameter. For example, the estimated depth map may be initialized with values from the obtained (measured) low-resolution depth-map.

Simultaneously updating a number of variables preferably refers to that in an iteration, each of the variables (here: estimated reflectance map, estimated lighting vector and estimated depth-map) is updated, wherein an update of at least one of the variables depends on another one of the variables, which was already updated in the iteration.

Determining the high-resolution depth map based on the iteratively updated estimated depth-map may comprise that the high-resolution depth map is determined as the estimated depth map of a final iteration, e.g. when the iteration has converged and an update rate is lower than a predetermined threshold. In other embodiments, determining the high-resolution depth map may involve further processing steps that are based on the iteratively updated estimated depth-map.

Embodiments of the method of the first aspect can jointly refine and up-sample the depth map using shape-from-shading. In other words, the ill-posedness of single depth image super-resolution may be fought using shape-from shading, and vice-versa.

In a first implementation of the method according to the first aspect, the low-resolution depth map and the high-resolution image are obtained using an RGB-D camera. This has the advantage that all required input information can be obtained from one camera device.

In a second implementation of the method according to the first aspect as such or according to the first implementation of the first aspect, a Potts prior is used for initializing and/or updating the estimated reflectance map. Experiments have shown that the reflectance of many objects maps the reflectance assumption of the Potts prior. Thus, superior results can be achieved.

In a third implementation of the method according to the first aspect as such or according to any of the preceding implementations of the first aspect, the iterative updates are determined based on an optimization of a cost function. In other words, in an iterative procedure, an estimated reflectance map, an estimated lighting vector and an estimated depth map that minimize (or maximize) the cost function.

In a fourth implementation of the method according to the first aspect as such or according to any of the preceding implementations of the first aspect, the cost function is given by

$$\left\|(l \cdot \mathbf{m}_{z,\nabla z})\rho - I\right\|_{\ell^2(\Omega_{HR})}^2 + \mu\left\|Kz - z_0\right\|_{\ell^2(\Omega_{LR})}^2 + \nu\left\|\mathrm{d}\mathcal{A}_{z,\nabla z}\right\|_{\ell^1(\Omega_{HR})} + \lambda\left\|\nabla\rho\right\|_{\ell^0(\Omega_{HR})}$$

wherein $\rho \colon \Omega_{HR} \to \mathbb{R}^c$ is the reflectance map, $l \in \mathbb{R}^d$ is the lighting vector, $z \colon \Omega_{HR} \to \mathbb{R}$ is the depth map, $I \colon \Omega_{HR} \to \mathbb{R}^c$ is the high-resolution image, $\mu$, $\nu$ and $\lambda$ are predetermined weights, $\mathbf{m}_{z,\nabla z}$ is a $\Omega_{HR} \to \mathbb{R}^d$ vector field, $\left\|\mathrm{d}\mathcal{A}_{z,\nabla z}\right\|_{\ell^1(\Omega_{HR})}$ is a total surface area of an object of the scene, $K$ is a linear down-sampling operator and $z_0$ is the low-resolution depth map.

The linear operator $K$ may also involve warping and/or blurring in addition to down-sampling. For example, the linear operator $K$ may be formed as a product of a down-sampling operator, a blurring operator and a warping operator.

In other embodiments, the operator $K$ may be non-linear.

In a fifth implementation of the method according to the fourth implementation of the first aspect, the weights $\mu$, $\nu$ and $\lambda$ are determined as

$$\mu = \frac{\sigma_I^2}{\sigma_z^2}, \quad \nu = \frac{2\sigma_I^2}{\alpha}$$

and

$$\lambda = \frac{2\sigma_I^2}{\beta}.$$

In a sixth implementation of the method according to the first aspect as such or according to any of the preceding implementations of the first aspect, the iteratively updating the estimated reflectance map, the estimated lighting vector, and the estimated depth-map comprises iteratively updating an auxiliary variable, wherein the auxiliary variable comprises the depth map and a gradient of the depth map.

Introducing this auxiliary variable has the advantage that the cost function can be separated into a linear part and a non-linear part, which simplifies the numerical computation.

In a seventh implementation of the method according to the first aspect as such or according to any of the preceding implementations of the first aspect, the iteratively updating the estimated reflectance map, the estimated lighting vector, and the estimated depth-map comprises determining

$$\rho^{(k+1)} = \underset{\rho}{\mathrm{argmin}} \; \left\|\left(l^{(k)} \cdot \mathbf{m}_{\theta^{(k)}}\right)\rho - I\right\|_{\ell^2(\Omega_{HR})}^2 + \lambda\left\|\nabla\rho\right\|_{\ell^0(\Omega_{HR})},$$

$$l^{(k+1)} = \underset{l}{\mathrm{argmin}} \; \left\|\left(l \cdot \mathbf{m}_{\theta^{(k)}}\right)\rho^{(k+1)} - I\right\|_{\ell^2(\Omega_{HR})}^2,$$

$$\theta^{(k+1)} = \underset{\theta}{\mathrm{argmin}} \; \left\|\left(l^{(k+1)} \cdot \mathbf{m}_\theta\right)\rho^{(k+1)} - I\right\|_{\ell^2(\Omega_{HR})}^2 + \nu\left\|\mathrm{d}\mathcal{A}_\theta\right\|_{\ell^1(\Omega_{HR})} + \frac{\kappa}{2}\left\|\theta - (z,\nabla z)^{(k)} + u^{(k)}\right\|_{\ell^2(\Omega_{HR})}^2,$$

and/or

$$z^{(k+1)} = \operatorname*{argmin}_{z} \mu \left\| Kz - z_0 \right\|^2_{\ell^2(\Omega_{LR})}$$
$$+ \frac{\kappa}{2} \left\| \theta^{(k+1)} - (z, \nabla z) + u^{(k)} \right\|^2_{\ell^2(\Omega_{HR})},$$

wherein $\rho^{(k+1)}$ is the updated estimated reflectance map, $l^{(k+1)}$ is the updated light vector, $\theta^{(k+1)}$ is the updated auxiliary variable and $z^{(k+1)}$ is the updated estimated depth map, and $\Omega_{HR}$ is the high-resolution domain, $u$ is a Lagrange multiplier, $\kappa$ is a step size, and wherein $\mathbf{m}_\theta$ is a vector field.

In an eighth implementation of the method according to the first aspect as such or according to any of the preceding implementations of the first aspect, the vector field $\mathbf{m}_\theta$ is a $\Omega_{HR} \to \mathbb{R}^d$ vector field defined as

$$\mathbf{m}_{z, \nabla z} = \begin{bmatrix} \dfrac{f \nabla z}{\sqrt{|f \nabla z|^2 + (-z - \mathbf{p} \cdot \nabla z)^2}} \\ \dfrac{-z - \mathbf{p} \cdot \nabla z}{\sqrt{|f \nabla z|^2 + (-z - \mathbf{p} \cdot \nabla z)^2}} \\ 1 \end{bmatrix}$$

wherein $f > 0$ is a focal length, $\theta = (z, \nabla z)$ and $\mathbf{p} \colon \Omega_{HR} \to \mathbb{R}^2$ a field of pixel coordinates with respect to a principal point.

In a ninth implementation of the method according to the first aspect as such or according to any of the preceding implementations of the first aspect, the method further comprises an initial step of segmenting one or more objects from the high-resolution image.

In a tenth implementation of the method according to the ninth implementations of the first aspect, the method is performed for each of the segmented one or more objects.

A second aspect of the invention refers to a device for determining a high-resolution depth map of a scene based on a low-resolution depth map of the scene and a high-resolution image of the scene, the device comprising:

- an initialization unit configured to initialize an estimated reflectance map, an estimated lighting vector and an estimated depth map, wherein the estimated reflectance map and the estimated depth map are in high-resolution,
- an iterative update unit configured to iteratively simultaneously update the estimated reflectance map, the estimated lighting vector, and the estimated depth-map, wherein updating the estimated depth map is partially based on the high-resolution image, and
- a determination unit configured to determine the high-resolution depth map based on the iteratively updated estimated depth-map.

The device of the second aspect may be configured to carry out the method of the first aspect or one of the implementations of the first aspect.

A third aspect of the invention refers to a computer-readable storage medium storing program code, the program code comprising instructions for carrying out the method of the third aspect.

## BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.

FIG. 1    is a flow chart of a method for determining a high-resolution depth map in accordance with an embodiment of the present invention,

FIG. 2    is a block diagram illustrating a device in accordance with an embodiment of the present invention,

FIG. 3    shows a series of diagrams illustrating the performance of a method in accordance with a further embodiment of the present invention, and

FIG. 4    shows a comparison of results of a method in accordance with an embodiment of the present invention and competing methods.

## DETAILED DESCRIPTION OF EMBODIMENTS

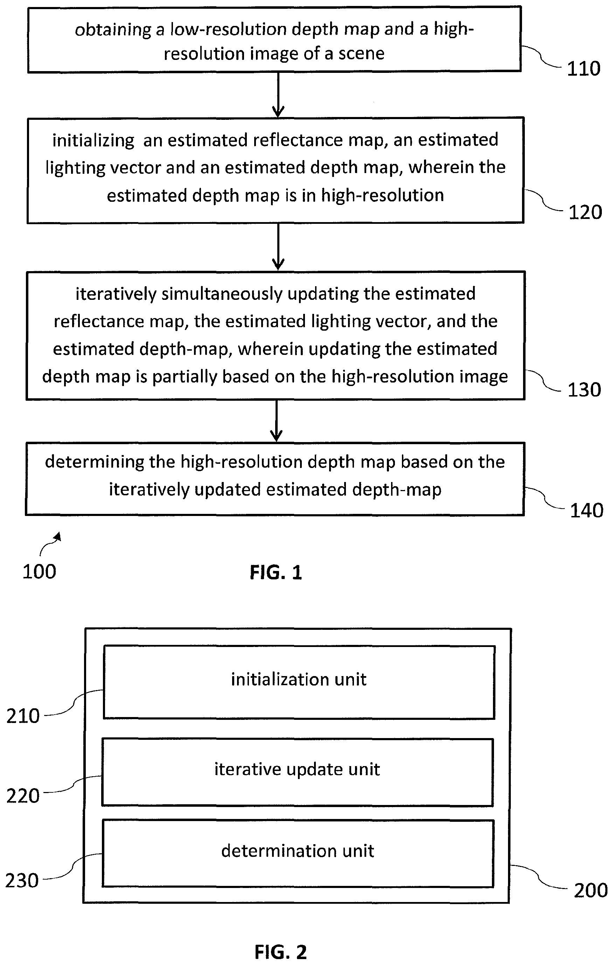

FIG. 1 is a flow chart of a method 100 for determining a high-resolution depth map in accordance with an embodiment of the present invention.

The method comprises a first step 110 of obtaining a low-resolution depth map and a high-resolution image of a scene. For example, the low-resolution depth map and the high-resolution image can be acquired with a RGB-D camera. The high-resolution image has a higher spatial resolution than the low-resolution depth map. The field of view of the high-resolution image and the low-resolution depth map do not need to be identical. Preferably, they are at least partially overlapping, e.g. at least 50% or at least 25% overlapping.

The method comprises a second step 120 of initializing an estimated reflectance map, an estimated lighting vector and an estimated depth map, wherein the estimated depth map is in high-resolution. The initializing step may consist simply in the creation of the variables in a program, and initial values may be assigned.

The method comprises a third step 130 of iteratively simultaneously updating the estimated reflectance map, the estimated lighting vector, and the estimated depth-map, wherein updating the estimated depth map is partially based on the high-resolution image. Therein, simultaneously updating refers to that in an iteration, each of these variables is updated, wherein an update of at least one of the variables depends on another one of the variables, which was already updated in the iteration.

The method comprises a final step 140 of determining the high-resolution depth map based on the iteratively updated estimated depth-map.

FIG. 2 is a block diagram illustrating a device 200 in accordance with an embodiment of the present invention.

The device 200 comprises an initialization unit 210, an iterative updated unit 220 and a determination unit 230. All three units may be realized on the same physical unit, e.g. on a processor with connected memory. In particular, the three units may be realized as three software modules running on a same processor.

The initialization unit 210 is configured to initialize an estimated reflectance map, an estimated lighting vector and an estimated depth map, wherein the estimated reflectance map and the estimated depth map are in high-resolution.

The iterative update unit 220 is configured to iteratively simultaneously update the estimated reflectance map, the estimated lighting vector, and the estimated depth-map, wherein updating the estimated depth map is partially based on the high-resolution image.

The determination unit 230 is configured to determine the high-resolution depth map based on the iteratively updated estimated depth-map.

In the following, a specific embodiment shall be explained in more detail.

A depth map can be realized as a function which associates to each 2D point of the image plane, the third component of its conjugate 3D-point, relatively to a camera coordinate system. Depth sensors provide out-of-the-box samples of the depth map over a discrete low-resolution rectangular 2D grid $\Omega_{\mathrm{LR}} \subset \mathbb{R}^2$. We denote by $z_0 : \Omega_{\mathrm{LR}} \to \mathbb{R}$, $p \mapsto z_0(p)$ such a mapping between a pixel $p$ and the measured depth value $z_0(p)$. Due to hardware constraints, the depth observations $z_0$ are limited by the resolution of the sensor (i.e., the number of pixels in $\Omega_{\mathrm{LR}}$). The single depth image super-resolution problem consists in estimating a high-resolution depth map : $\Omega_{HR} \to \mathbb{R}$ over a larger domain $\Omega_{HR} \supset \Omega_{LR}$, which coincides with the low-resolution observations $z_0$ over $\Omega_{LR}$ once it is downsampled. This can be formally written as

$$z_0 = Kz + \eta_z. \quad (1)$$

In equation (1), $K : \mathbb{R}^{\Omega_{\mathrm{HR}}} \to \mathbb{R}^{\Omega_{\mathrm{LR}}}$ is a linear operator combining warping, blurring and down-sampling. It can be calibrated beforehand, hence assumed to be known. As for $\eta_z$, it stands for the realisation of some stochastic process representing measurement errors, quantisation, etc. Single depth image super-resolution requires solving equation (1) in terms of the high-resolution depth map $z$. However, $K$ in equation (1) maps from a high-dimensional space

$\Omega_{HR}$ to a low-dimensional one $\Omega_{LR}$, hence it cannot be inverted. Single depth image (blind) super-resolution is thus an ill-posed problem, as there exist infinitely many choices for interpolating between observations. Therefore, one must find a way to constrain the problem, as well as to handle noise.

Shape-from-shading aims at inferring shape from a single gray-level or color image of a scene. It comprises inverting an image formation model relating the image irradiance I to the scene radiance R, which depends on the surface shape (represented here by the depth map z), the incident lighting I and the surface reflectance $\rho$:

$$I = R(z|l, \rho) + \eta_I \quad (2)$$

Therein $\eta_I$ is the realisation of a stochastic process standing for noise, quantisation and outliers.

In the context of RGB-D sensing, the high-frequency information necessary to achieve detail-preserving depth super-resolution could be provided by the photometric data. Similarly, the low-frequency information necessary to disambiguate shape-from-shading could be conveyed by the geometric data. It is thus possible to achieve joint depth map refinement and super-resolution in a single shot, without resorting to additional data (new viewing angles or illumination conditions, learnt dictionary, etc.).

We formulate shading-based depth super-resolution as the joint solving of (1) (super-resolution) and (2) (shape-from-shading) in terms of the high-resolution depth map $z$ : $z: \Omega_{HR} \to \mathbb{R}$, given a low-resolution depth map $z: \Omega_{LR} \to \mathbb{R}$ and a high-resolution RGB image $I: \Omega_{HR} \to \mathbb{R}^3$. We aim at recovering not only a high-resolution depth map which is consistent both with the low-resolution depth measurements and with the high-resolution color data, but also the hidden parameters of the image formation model (2) i.e., the reflectance $\rho$ and the lighting I. This can be achieved by maximizing the posterior distribution of the input data which, according to Bayes rule, is given by

$$\mathcal{P}(z, \rho, l|z_0, I) = \frac{\mathcal{P}(z_0, I|z, \rho, l)\, \mathcal{P}(z, \rho, l)}{\mathcal{P}(z_0, I)}, \quad (4)$$

where the numerator is the product of the likelihood with the prior, and the denominator is the evidence, which can be discarded since it plays no role in maximum a posteriori (MAP) estimation. In order to make the independency assumptions as transparent as possible and to motivate the final energy we aim at minimizing, we follow derive a variational model from the posterior distribution (4).

**Likelihood**

Let us start with the first term in the numerator of (4) i.e., the likelihood. By construction of RGB-D sensors, depth and color observations are independent, hence

$$\mathcal{P}(z_0, I|z, \rho, l) = \mathcal{P}(z_0|z, \rho, l)\, \mathcal{P}(I|z, \rho, l)_.$$

We further assume that the depth observations are independent from the surface reflectance and from the lighting, hence $\mathcal{P}(z_0|z, \rho, l) = \mathcal{P}(z_0|z)$ and thus:

$$\mathcal{P}(z_0, I|z, \rho, l) = \mathcal{P}(z_0|z)\, \mathcal{P}(I|z, \rho, l). \quad (5)$$

Assuming homoscedastic, zero-mean Gaussian noise $\eta_z$ with variance $\sigma_z^2$ in (1), the first factor in (5) writes

$$\mathcal{P}(z_0|z) \propto \exp\left\{ -\frac{\|Kz - z_0\|_{\ell^2(\Omega_{LR})}^2}{2\sigma_z^2} \right\}. \quad (6)$$

Next, we discuss the second factor in (5), by making Equation (2) explicit. In general, the irradiance in channel * ∈ {R, G, B} writes

$$I_* = \int_\lambda \int_\omega c_*(\lambda)\rho(\lambda)\phi(\lambda, \omega) \max\{0, \mathbf{s}(\omega) \cdot \mathbf{n}_z\} \, d\omega \, d\lambda + \eta_I, \tag{7}$$

where integration is carried out over all wavelengths $\lambda$ ($\rho$ is the spectral reflectance of the surface and $c^*$ is the transmission spectrum of the camera in channel *) and all incident lighting directions $\omega$ ($\mathbf{s}(\omega)$ is the unit-length vector pointing towards the light source located in direction $\omega$, and $\phi(\cdot, \omega)$ is the spectrum of this source), and $\mathbf{n}_z$ is the unit-length surface normal (which depends on the underlying depth map $z$). Assuming achromatic lighting i.e., $\phi(\cdot, \omega) := \phi(\omega)$, and using a first-order spherical harmonics approximation of the inner integral, we obtain

$$I = \underbrace{\begin{bmatrix} \int_\lambda c_R(\lambda)\rho(\lambda)d\lambda \\ \int_\lambda c_G(\lambda)\rho(\lambda)d\lambda \\ \int_\lambda c_B(\lambda)\rho(\lambda)d\lambda \end{bmatrix}}_{:=\rho} l \cdot \begin{bmatrix} \mathbf{n}_z \\ 1 \end{bmatrix} + \eta_I, \tag{8}$$

with $l \in \mathbb{R}^4$ the achromatic "light vector", $\rho: \Omega_{HR} \to \mathbb{R}^3$ the albedo (Lambertian reflectance) map, relatively to the camera transmission spectra $\{c\star\}_{\star\in\{R,G,B\}}$, and $\Omega_{HR} \to \mathbb{S}^2 \subset \mathbb{R}^3$ the field of unit-length surface normals. Assuming perspective projection with focal length f > 0 and $\mathbf{p}: \Omega_{HR} \to \mathbb{R}^2$ the field of pixel coordinates with respect to the principal point, the normal field is given by

$$\mathbf{n}_z = \frac{1}{\sqrt{|f\,\nabla z|^2 + (-z - \mathbf{p} \cdot \nabla z)^2}} \begin{bmatrix} f\,\nabla z \\ -z - \mathbf{p} \cdot \nabla z \end{bmatrix} \tag{9}$$

Assuming that the image noise is homoscedastically Gaussian-distributed with zero-mean and covariance matrix $\mathrm{Diag}(\sigma_I^2, \sigma_I^2, \sigma_I^2)$, we obtain

$$\mathcal{P}(I|z,\rho,l) \propto \exp\left\{ -\frac{\|(l \cdot \mathbf{m}_{z,\nabla z})\,\rho - I\|_{\ell^2(\Omega_{HR})}^2}{2\sigma_I^2} \right\}, \tag{10}$$

where, according to (8) and (9), $\mathbf{m}_{z,\nabla z}$ is a $\Omega_{HR} \to \mathbb{R}^4$ vector field defined as

$$\mathbf{m}_{z,\nabla z} = \begin{bmatrix} \dfrac{f\,\nabla z}{\sqrt{|f\,\nabla z|^2 + (-z - \mathbf{p} \cdot \nabla z)^2}} \\ \dfrac{-z - \mathbf{p} \cdot \nabla z}{\sqrt{|f\,\nabla z|^2 + (-z - \mathbf{p} \cdot \nabla z)^2}} \\ 1 \end{bmatrix}. \tag{11}$$

**Priors**

We now consider the second factor in the numerator of (4) i.e., the prior distribution. We assume that depth, reflectance and lighting are independent (independence of reflectance from depth and lighting follows from the Lambertian assumption, and independence of lighting from depth follows from the distant-light assumption required to derive the spherical harmonics model (8)). This implies

$$\mathcal{P}(z, \rho, l) = \mathcal{P}(z)\,\mathcal{P}(\rho)\,\mathcal{P}(l). \quad (12)$$

Since lighting has already been modelled as a low-frequency phenomenon for the sake of expliciting the image formation model (8), we do not need to introduce any other prior $\mathcal{P}(l)$ and thus we use an improper prior

$$\mathcal{P}(l) = \text{constant} \quad (13)$$

Regarding the depth map $z$, we and opt for a minimal surface prior. Remark that

$$\mathrm{d}\mathcal{A}_{z,\nabla z} = \frac{z}{f^2}\sqrt{|f\,\nabla z|^2 + (-z - \mathbf{p}\cdot\nabla z)^2} \quad (14)$$

is a $\Omega_{HR} \to \mathbb{R}$ scalar field which maps each pixel to the area of the corresponding surface element. Thus $\|\mathrm{d}\mathcal{A}_{z,\nabla z}\|_{\ell^1(\Omega_{HR})}$ is the total surface area and the minimal surface prior writes

$$\mathcal{P}(z) \propto \exp\left\{-\frac{\|\mathrm{d}\mathcal{A}_{z,\nabla z}\|_{\ell^1(\Omega_{HR})}}{\alpha}\right\}, \quad (15)$$

with $\alpha > 0$ a free parameter controlling smoothness. According to the Retinex theory, the reflectance $\rho$ can be assumed piecewise constant. This yields a Potts prior

$$\mathcal{P}(\rho) \propto \exp\left\{-\frac{\|\nabla\rho\|_{\ell^0(\Omega_{HR})}}{\beta}\right\}, \quad (16)$$

with $\beta > 0$ a scale parameter, and $\|\cdot\|_{\ell^0}$ an abusive notation for the length of the discontinuity set:

$$\|\nabla\rho\|_{\ell^0(\Omega_{HR})} = \sum_{p\in\Omega_{HR}}\begin{cases} 0, & \text{if } |\nabla\rho(p)|_2 = 0, \\ 1, & \text{otherwise,} \end{cases} \quad (17)$$

where $|\cdot|_2$ is the Euclidean norm in $\mathbb{R}^6$.

**Variational formulation**

Replacing the maximisation of the posterior distribution (4) by the minimisation of its negative logarithm, combining Equations (4)-(6), (10), (12)-(16), and neglecting the additive constants, we end up with the variational model

$$\min_{\substack{\rho:\, \Omega_{\mathrm{HR}} \to \mathbb{R}^3 \\ l \in \mathbb{R}^4 \\ z:\, \Omega_{\mathrm{HR}} \to \mathbb{R}}} \left\| (l \cdot \mathbf{m}_{z,\nabla z}) \rho - I \right\|^2_{\ell^2(\Omega_{\mathrm{HR}})} + \mu \left\| Kz - z_0 \right\|^2_{\ell^2(\Omega_{\mathrm{LR}})}$$
$$+ \nu \left\| \mathrm{d}\mathcal{A}_{z,\nabla z} \right\|_{\ell^1(\Omega_{\mathrm{HR}})} + \lambda \left\| \nabla\rho \right\|_{\ell^0(\Omega_{\mathrm{HR}})}, \quad (18)$$

with the following definitions of the weights:

$$\mu = \frac{\sigma_I^2}{\sigma_z^2}, \quad \nu = \frac{2\sigma_I^2}{\alpha} \text{ and } \lambda = \frac{2\sigma_I^2}{\beta}. \qquad (19)$$

**Numerical solution**

We now describe an algorithm for effectively solving the variational problem (18), which is both non-smooth and nonconvex. In order to tackle the nonlinear dependency upon the depth and its gradient arising from shape-from-shading and minimal surface regularisation, we introduce an auxiliary variable $\theta := (z, \nabla z)$, then rewrite (18) as a constrained optimisation problem:

$$\min_{\substack{\rho:\, \Omega_{\mathrm{HR}} \to \mathbb{R}^3 \\ l \in \mathbb{R}^4 \\ z:\, \Omega_{\mathrm{HR}} \to \mathbb{R} \\ \theta:\, \Omega_{\mathrm{HR}} \to \mathbb{R}^3}} \left\| (l \cdot \mathbf{m}_\theta) \rho - I \right\|^2_{\ell^2(\Omega_{\mathrm{HR}})} + \mu \left\| Kz - z_0 \right\|^2_{\ell^2(\Omega_{\mathrm{LR}})}$$
$$+ \nu \left\| \mathrm{d}\mathcal{A}_\theta \right\|_{\ell^1(\Omega_{\mathrm{HR}})} + \lambda \left\| \nabla\rho \right\|_{\ell^0(\Omega_{\mathrm{HR}})}$$

$$\text{s.t. } \theta = (z, \nabla z). \qquad (20)$$

We then use a multi-block variant of ADMM to solve (20). Given the current estimates $(\rho^{(k)}, I^{(k)}, \theta^{(k)}, z^{(k)})$ at iteration (k), the variables are updated according to the following sweep:

$$\rho^{(k+1)} = \operatorname*{argmin}_{\rho} \left\| \left( l^{(k)} \cdot \mathbf{m}_{\theta^{(k)}} \right) \rho - I \right\|^2_{\ell^2(\Omega_{\mathrm{HR}})} + \lambda \left\| \nabla\rho \right\|_{\ell^0(\Omega_{\mathrm{HR}})}, \qquad (21)$$

$$l^{(k+1)} = \operatorname*{argmin}_{l} \left\| (l \cdot \mathbf{m}_{\theta^{(k)}}) \rho^{(k+1)} - I \right\|^2_{\ell^2(\Omega_{\mathrm{HR}})}, \qquad (22)$$

$$\theta^{(k+1)} = \operatorname*{argmin}_{\theta} \left\| \left( l^{(k+1)} \cdot \mathbf{m}_\theta \right) \rho^{(k+1)} - I \right\|^2_{\ell^2(\Omega_{\mathrm{HR}})}$$
$$\cdot + \nu \left\| \mathrm{d}\mathcal{A}_\theta \right\|_{\ell^1(\Omega_{\mathrm{HR}})} + \frac{\kappa}{2} \left\| \theta - (z, \nabla z)^{(k)} + u^{(k)} \right\|^2_{\ell^2(\Omega_{\mathrm{HR}})}, \qquad (23)$$

$$z^{(k+1)} = \operatorname*{argmin}_{z} \mu \left\| Kz - z_0 \right\|^2_{\ell^2(\Omega_{\mathrm{LR}})}$$
$$+ \frac{\kappa}{2} \left\| \theta^{(k+1)} - (z, \nabla z) + u^{(k)} \right\|^2_{\ell^2(\Omega_{\mathrm{HR}})}, \qquad (24)$$

$$u^{(k+1)} = u^{(k)} + \theta^{(k+1)} - \left(z^{(k+1)}, \nabla z^{(k+1)}\right), \qquad (25)$$

where u and $\kappa$ are a Lagrange multiplier and a step size, respectively. In our implementation $\kappa$ is determined automatically using the varying penalty procedure. To solve the albedo sub-problem (21) we resort to primal-dual iterations. The lighting update (22) is solved using pseudo-inverse. The $\theta$-update (23) comes down to a series of independent (there is no coupling between neighbouring pixels, thanks to the ADMM strategy) nonlinear optimisation problems, which we solve using an implementation of the L-BFGS method, using the Moreau envelope of the $\ell^1$ norm to ensure differentiability. The depth update (24) requires solving a large sparse linear least-squares problem, which we tackle using conjugate gradient on the normal equations. Although the overall optimisation problem (18) is nonconvex, recent works have demonstrated that under mild assumptions on the cost function and small enough step size $\kappa$, nonconvex ADMM converges to a critical point. In practice, we found the proposed ADMM scheme to be stable and always observed convergence. In our experiments we use as initial guess: $\rho^{(0)} = 1$, $l^{(0)} = [0, 0, -1, 0]^T$, $z^{(0)}$ a smoothed (using bilinear filtering) version of a linear interpolation of the low-resolution input $z^0$, $\theta^{(0)} = (z^0, \nabla z^{(0)})$, $u^{(0)} \equiv 0$ and $\kappa^{(0)} = 10^{-4}$. In all our experiments, 10 to 20 global iterations (k) were sufficient to reach convergence, which is evaluated through the relative residual between two successive depth estimates $z^{(k+1)}$ and $z^{(k)}$. On a recent laptop computer with *i7* processor, such a process requires around one minute (code is implemented in Matlab except the albedo update, which is implemented in CUDA).

### Experimental validation

We evaluated our variational approach to joint depth super-resolution and shape-from-shading against challenging synthetic and real-world datasets.

### Synthetic data

We first discuss the choice of the parameters involved in the variational problem (18). Although their optimal values can be deduced from the data statistics (see (19)), it can be difficult to estimate such statistics in practice and thus we rather consider $\mu$, v and $\lambda$ as tuneable hyper-parameters. The formulae in (19) remain however insightful regarding the way these parameters should be tuned.

To select an appropriate set of parameters, we consider a synthetic dataset (the publicly available "Joyful Yell" 3D-shape) which we render under first-order spherical harmonics lighting ($l = [0, 0, -1, 0.2]^T$) with three different reflectance maps. Additive zero-mean Gaussian noise with standard deviation 1% that of the original images is added to the high resolution ($640 \times 480$ px$^2$) images. Ground-truth high resolution and input low-resolution ($320 \times 240$ px$^2$) depth maps are rendered from the 3D-model. Non-uniform zero-mean Gaussian noise with standard deviation $10^{-3}$ times the squared original depth value (consistently with real-world measurements) is then added to the low-resolution depth map.

Quantitative evaluation is carried out by evaluating the root mean squared error (RMSE) between the estimated depth and albedo maps and the ground-truth ones.

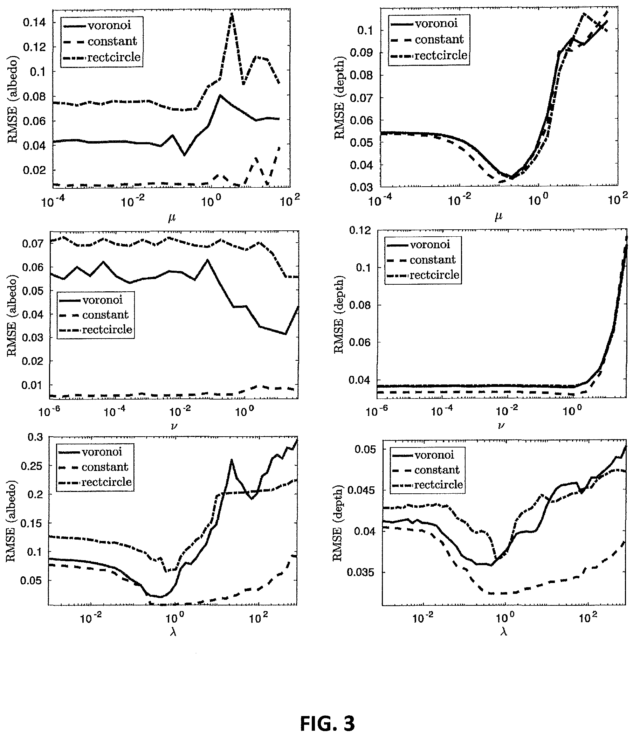

Initially, we chose $\mu = \dfrac{1}{12}$, v = 2 and $\lambda = 1$. Then, we evaluated the impact of varying each parameter, keeping the others fixed to these values found empirically. The impact of the parameters $\mu$, v and $\lambda$ on the accuracy of the albedo and depth estimates are shown in FIG. 3. Based on those experiments, we selected the set of parameters ($\mu$, v, $\lambda$) = (10-1, 10-1,2) for our experiments.

Quite logically, $\mu$ should not be set too high otherwise the resulting depth map is as noisy as the input. Low values always allow a good albedo estimation, but the range $\mu \in [10^{-2}, 1]$ seems to provide the most accurate depth maps. Regarding $\lambda$, larger values should be chosen if the reflectance is uniform, but they induce high errors whenever it is not. On the other hand, low values systematically yield high errors since the reflectance estimate absorbs all the shading information. In between, the range $\lambda \in [10^{-1}, 10]$ seems to always give reasonable results. Eventually, high values of v should be avoided in order to prevent over-smoothing. Since we chose to disambiguate shape-from-shading by assuming piecewise-constant reflectance, the minimal surface prior plays no role in disambiguation. This explains why low values of v should be preferred. Depth regularisation matters only when color cannot be exploited, for instance due to shadows, black reflectance or saturation. This will be better visualised in the real-world experiments.

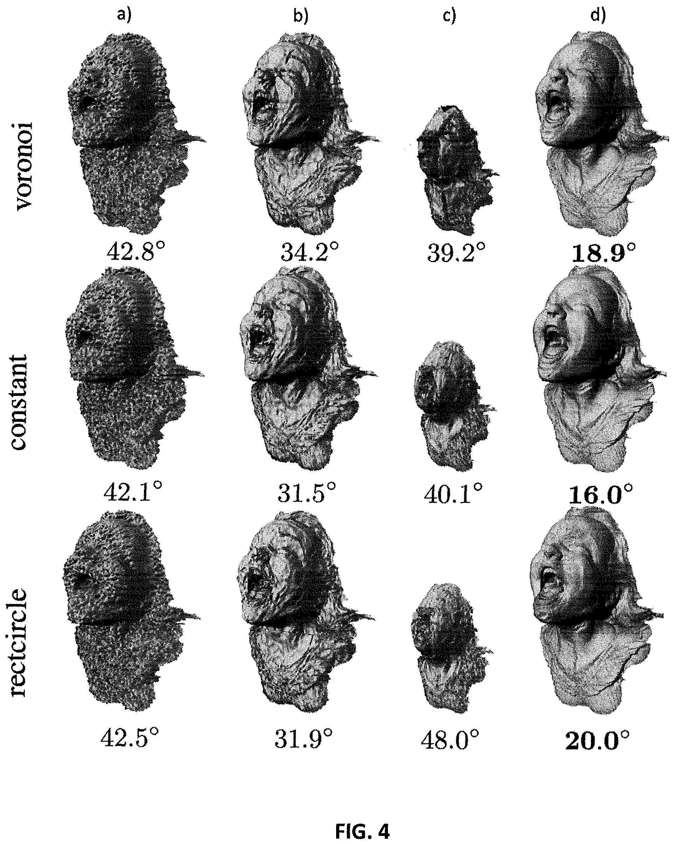

FIG. 4 shows a comparison between a learning-based method (see column a), an image-based approach (see column b) and a shading-based refinement using low-resolution images (see column c) and our presented method (see column d). Our presented method systematically outperforms the others (numbers are the mean angular errors on normals).

To emphasise the interest of joint shape-from-shading and super-resolution over shading-based depth refinement using the down-sampled image, we also show competing results. For fair comparison, this time we use a scaling factor of 4 for all methods i.e., the depth maps are rendered at $120 \times 160$ px$^2$. To evaluate the recovery of thin structures, we provide the mean angular error with respect to surface normals. The learning-based method can obviously not hallucinate surface details since it does not use the color image. The image-based method does a much better job, but it is largely overcome by shading-based super-resolution.

**Real-world data**

For real-world experiments, we use the Asus Xtion Pro Live sensor, which delivers $1280 \times 1024$ px$^2$ RGB and $640 \times 480$ px$^2$ depth images at 30 fps. Data are acquired in an indoor office with ambient lighting, and objects are manually segmented from background before processing. Combining depth super-resolution and shape-from-shading apparently resolves the low-frequency and high-frequency ambiguities arising in either of the inverse problems. Over-segmentation of reflectance may happen, but this does not seem to impact depth recovery. Whenever color gets saturated or too low, then minimal surface drives super-resolution, which adds robustness. Visual inspection confirms the superiority of the presented method.

Handling cases with smoothly-varying reflectance may require using, instead of the Potts prior, another prior for the reflectance, or actively controlling lighting. This has already been achieved in RGB-D sensing.

The foregoing descriptions are only implementation manners of the present invention, the scope of the present invention is not limited to this. Any variations or replacements can be easily made through person skilled in the art. Therefore, the protection scope of the present invention should be subject to the protection scope of the attached claims.

**Claims**

1.   A method (100) for determining a high-resolution depth map of a scene, the method comprising:

   - obtaining (110) a low-resolution depth map of the scene,
   - obtaining (110) a high-resolution image of the scene,
   - initializing (120) an estimated reflectance map, an estimated lighting vector and an estimated depth map, wherein the estimated depth map is in high-resolution,
   - iteratively simultaneously updating (130) the estimated reflectance map, the estimated lighting vector, and the estimated depth-map, wherein updating the estimated depth map is partially based on the high-resolution image, and
   - determining (140) the high-resolution depth map based on the iteratively updated estimated depth-map.

2.   The method (100) of claim 1, wherein the low-resolution depth map and the high-resolution image are obtained using an RGB-D camera.

3.   The method (100) of one of the previous claims, wherein a Potts prior is used for initializing and/or updating the estimated reflectance map.

4.   The method (100) of one of the previous claims, when the iterative updates are determined based on an optimization of a cost function.

5.   The method (100) of claim 4, wherein the cost function is given by

$$\left\| (l \cdot \mathbf{m}_{z,\nabla z}) \rho - I \right\|_{\ell^2(\Omega_{\mathrm{HR}})}^2 + \mu \left\| Kz - z_0 \right\|_{\ell^2(\Omega_{\mathrm{LR}})}^2 + \nu \left\| \mathrm{d}\mathcal{A}_{z,\nabla z} \right\|_{\ell^1(\Omega_{\mathrm{HR}})} + \lambda \left\| \nabla \rho \right\|_{\ell^0(\Omega_{\mathrm{HR}})}$$

wherein $\rho : \Omega_{\mathrm{HR}} \to \mathbb{R}^c$ is the reflectance map, $l \in \mathbb{R}^d$ is the lighting vector, $z : \Omega_{\mathrm{HR}} \to \mathbb{R}$ the depth map, $I : \Omega_{\mathrm{HR}} \to \mathbb{R}^c$ is the high-resolution image, $\mu$, $v$ and $\lambda$ are predetermined weights, $\mathbf{m}_{z,\nabla z}$ is a $\Omega_{\mathrm{HR}} \to \mathbb{R}^d$ vector field, $\left\| \mathrm{d}\mathcal{A}_{z,\nabla z} \right\|_{\ell^1(\Omega_{\mathrm{HR}})}$ is a total surface area of an object of the scene, K is a linear down-sampling operator and $z_0$ is the low-resolution depth map.

**6.** The method (100) of claim 5, wherein the weights $\mu$, $v$ and $\lambda$ are determined as

$$\mu = \frac{\sigma_I^2}{\sigma_z^2}, \quad \nu = \frac{2\sigma_I^2}{\alpha} \text{ and } \lambda = \frac{2\sigma_I^2}{\beta}.$$

**7.** The method (100) of one of the previous claims, wherein the iteratively updating the estimated reflectance map, the estimated lighting vector, and the estimated depth-map comprises iteratively updating an auxiliary variable, wherein the auxiliary variable comprises the depth map and a gradient of the depth map.

**8.** The method (100) of one of the previous claims, wherein the iteratively updating the estimated reflectance map, the estimated lighting vector, and the estimated depth-map comprises determining

$$\rho^{(k+1)} = \operatorname*{argmin}_{\rho} \left\| \left( l^{(k)} \cdot \mathbf{m}_{\theta^{(k)}} \right) \rho - I \right\|_{\ell^2(\Omega_{\mathrm{HR}})}^2 + \lambda \left\| \nabla\rho \right\|_{\ell^0(\Omega_{\mathrm{HR}})},$$

$$l^{(k+1)} = \operatorname*{argmin}_{l} \left\| \left( l \cdot \mathbf{m}_{\theta^{(k)}} \right) \rho^{(k+1)} - I \right\|_{\ell^2(\Omega_{\mathrm{HR}})}^2,$$

$$\theta^{(k+1)} = \operatorname*{argmin}_{\theta} \left\| \left( l^{(k+1)} \cdot \mathbf{m}_{\theta} \right) \rho^{(k+1)} - I \right\|_{\ell^2(\Omega_{\mathrm{HR}})}^2 + \nu \| \mathrm{d}\mathcal{A}_\theta \|_{\ell^1(\Omega_{\mathrm{HR}})} + \frac{\kappa}{2} \left\| \theta - (z, \nabla z)^{(k)} + u^{(k)} \right\|_{\ell^2(\Omega_{\mathrm{HR}})}^2,$$

and/or

$$z^{(k+1)} = \operatorname*{argmin}_{z} \mu \| Kz - z_0 \|_{\ell^2(\Omega_{\mathrm{LR}})}^2 + \frac{\kappa}{2} \left\| \theta^{(k+1)} - (z, \nabla z) + u^{(k)} \right\|_{\ell^2(\Omega_{\mathrm{HR}})}^2,$$

wherein $\rho^{(k+1)}$ is the updated estimated reflectance map, $l^{(k+1)}$ is the updated light vector, $\theta^{(k+1)}$ is the updated auxiliary variable and $z^{(k+1)}$ is the updated estimated depth map, and $\Omega_{HR}$ is the high-resolution domain, $u$ is a Lagrange multiplier, $\kappa$ is a step size, and wherein $\mathbf{m}_\theta$ is a vector field.

**9.** The method (100) of claim 8, wherein the vector field $\mathbf{m}_\theta$ is a $\Omega_{\mathrm{HR}} \to \mathbb{R}^d$ vector field defined as

$$\mathbf{m}_{z,\nabla z} = \begin{bmatrix} \dfrac{f\,\nabla z}{\sqrt{|f\,\nabla z|^2 + (-z - \mathbf{p} \cdot \nabla z)^2}} \\ \dfrac{-z - \mathbf{p} \cdot \nabla z}{\sqrt{|f\,\nabla z|^2 + (-z - \mathbf{p} \cdot \nabla z)^2}} \\ 1 \end{bmatrix}$$

wherein $f > 0$ is a focal length, $\theta = (z, \nabla z)$ and $\mathbf{p} : \Omega_{\mathrm{HR}} \to \mathbb{R}^2$ a field of pixel coordinates with respect to a principal point.

**10.** The method (100) of one of the previous claims, further comprising an initial step of segmenting one or more objects from the high-resolution image.

**11.** The method (100) of claim 10, wherein the method is performed for each of the segmented one or more objects.

**12.** A device (200) for determining a high-resolution depth map of a scene based on a low-resolution depth map of the scene and a high-resolution image of the scene, the device comprising:

- an initialization unit (210) configured to initialize an estimated reflectance map, an estimated lighting vector and an estimated depth map, wherein the estimated reflectance map and the estimated depth map are in high-resolution,
- an iterative update unit (220) configured to iteratively simultaneously update the estimated reflectance map, the estimated lighting vector, and the estimated depth-map, wherein updating the estimated depth map is partially based on the high-resolution image, and
- a determination unit (230) configured to determine the high-resolution depth map based on the iteratively updated estimated depth-map.

**13.** A computer-readable storage medium storing program code, the program code comprising instructions that when executed by a processor carry out the method of claims 1 to 11.

obtaining a low-resolution depth map and a high-resolution image of a scene

— 110

initializing an estimated reflectance map, an estimated lighting vector and an estimated depth map, wherein the estimated depth map is in high-resolution

— 120

iteratively simultaneously updating the estimated reflectance map, the estimated lighting vector, and the estimated depth-map, wherein updating the estimated depth map is partially based on the high-resolution image

— 130

determining the high-resolution depth map based on the iteratively updated estimated depth-map

— 140

100

**FIG. 1**

initialization unit

210 —

iterative update unit

220 —

determination unit

230 —

— 200

**FIG. 2**

**FIG. 3**

**FIG. 4**

Europäisches
Patentamt

European
Patent Office

Office européen
des brevets

# EUROPEAN SEARCH REPORT

Application Number

EP 18 17 1058

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BOGUMIL BARTCZAK ET AL: "Dense Depth Maps from Low Resolution Time-of-Flight Depth and High Resolution Color Views", 30 November 2009 (2009-11-30), ADVANCES IN VISUAL COMPUTING, SPRINGER BERLIN HEIDELBERG, BERLIN, HEIDELBERG, PAGE(S) 228 - 239, XP019135091, ISBN: 978-3-642-10519-7 * abstract; figure 2 * * section 4; page 4 - page 7 * | 1-13 | INV. G06T7/50 |
| A | HYEOKHYEN KWON ET AL: "Data-driven depth map refinement via multi-scale sparse representation", 2015 IEEE CONFERENCE ON COMPUTER VISION AND PATTERN RECOGNITION (CVPR), IEEE, 7 June 2015 (2015-06-07), pages 159-167, XP032793441, DOI: 10.1109/CVPR.2015.7298611 [retrieved on 2015-10-14] * Algorithms 1 and 2; page 162 * | 1-13 | |
| A | ZUO XINXIN ET AL: "Detailed Surface Geometry and Albedo Recovery from RGB-D Video under Natural Illumination", 2017 IEEE INTERNATIONAL CONFERENCE ON COMPUTER VISION (ICCV), IEEE, 22 October 2017 (2017-10-22), pages 3152-3161, XP033283183, DOI: 10.1109/ICCV.2017.340 [retrieved on 2017-12-22] * the whole document * | 1-13 | TECHNICAL FIELDS SEARCHED (IPC) G06T |

-/--

The present search report has been drawn up for all claims

| Place of search | Date of completion of the search | Examiner |
|---|---|---|
| Munich | 25 June 2018 | Blaszczyk, Marek |

EPO FORM 1503 03.82 (P04C01)

page 1 of 2

Europäisches
Patentamt

European
Patent Office

Office européen
des brevets

## EUROPEAN SEARCH REPORT

Application Number

EP 18 17 1058

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI LI ET AL: "A Nonlocal Filter-Based Hybrid Strategy for Depth Map Enhancement", INTERNATIONAL CONFERENCE ON PATTERN RECOGNITION, IEEE COMPUTER SOCIETY, US, 24 August 2014 (2014-08-24), pages 4394-4399, XP032698126, ISSN: 1051-4651, DOI: 10.1109/ICPR.2014.752 [retrieved on 2014-12-04] * the whole document * | 1-13 | |
| A | Yinda Zhang ET AL: "Deep Depth Completion of a Single RGB-D Image", , 25 March 2018 (2018-03-25), XP055487394, Retrieved from the Internet: URL:http://openaccess.thecvf.com/content_c vpr_2018/CameraReady/3324.pdf [retrieved on 2018-06-22] * section 3 * | 1-12 | |
| A | Dmitry Chetverikov ET AL: "A Brief Survey of Image-Based Depth Upsampling", , 1 January 2015 (2015-01-01), XP055487390, Retrieved from the Internet: URL:http://eprints.sztaki.hu/8543/1/Csetve rikov_279_2832465_ny.pdf [retrieved on 2018-06-25] * the whole document * | 1-12 | |

TECHNICAL FIELDS
SEARCHED (IPC)

The present search report has been drawn up for all claims

| Place of search | Date of completion of the search | Examiner |
|---|---|---|
| Munich | 25 June 2018 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)